# EUROPÄISCHE PATENTANMELDUNG

(11) **EP 2 789 571 A1**
(43) Veröffentlichungstag der Anmeldung: **15.10.2014**
(21) Anmeldenummer: 14163256.2
(22) Anmeldetag: 02.04.2014
(51) Int. Cl.: B66F 9/22, B66F 17/00, E02F 9/20, E02F 9/22

(54) **Hubvorrichtung**

(30) Priorität: 10.04.2013 DE 102013206319
(71) Anmelder: DEERE & COMPANY, Moline, Illinois 61265-8098 (US)
(72) Erfinder: Jung, Sebastian, 68542 Heddesheim (DE); Seebode, Mario, 68199 Mannheim (DE); Bitter, Marcus, 44267 Dortmund Benninghofen (DE)
(74) Vertreter: Lange, Robert

(57) **Zusammenfassung**

Die Erfindung betrifft eine Hubvorrichtung [**10**] zum Heben und Senken einer Nutzlast [**m_{L}** ], die über ein mittels einer elektronischen Steuereinheit [**12**] angesteuertes hydraulisches Steuerventil [**14**] in zumindest den Betriebsarten Heben und Senken betreibbar ist.

## Beschreibung

Die Erfindung betrifft eine Hubvorrichtung zum Heben und Senken einer Nutzlast, die über ein mittels einer elektronischen Steuereinheit angesteuertes hydraulisches Steuerventil in zumindest den Betriebsarten Heben und Senken betreibbar ist.

Hubvorrichtungen sind als Frontkraftheber oder Heckkraftheber als Bestandteil von landwirtschaftlichen Arbeitsmaschinen, insbesondere Traktoren, bekannt. Heckkraftheber sind als Standardausrüstung an Traktoren angebaut, Frontkraftheber können optional angebaut werden. Regelmäßig werden derartige Hubvorrichtungen mit einfachen hydraulischen Steuerventilen betrieben. Diese Steuerventile sind selten auf die Bedürfnisse einer Hubvorrichtung abgestimmt, so dass es zu kritischen Betriebszuständen kommen kann. Bekannt sind Steuerventile bei denen eine Nutzlast sich nicht schnell absenkt. Erreicht wird dies durch eingebaute Druckwaagen, die den zurückfließenden Hydraulikstrom begrenzen und einregeln.

Das Absenken der Nutzlast, dass heißt die Betriebsart Senken einer Hubvorrichtung, stellt insofern ein Problem dar, da Steuerventile prinzipiell das zurückfließende Hydrauliköl über eine Drosselsteuerkante beziehungsweise über einen Öffnungsquerschnitt des Schiebers des Steuerventils in das Hydraulikreservoir ableiten. Der Volumenstrom, der dabei fließt und somit die Absenkgeschwindigkeit der Hubvorrichtungen bestimmt, ist abhängig vom Druckgefälle über dem Schieber des Steuerventils. Dies bedeutet, dass bei gleicher Ventilöffnung beziehungsweise Schieberstellung Nutzlasten unterschiedlicher Masse sich unterschiedlich schnell absenken, wenn die Ventilöffnung beziehungsweise Schieberstellung nicht an die jeweilige Nutzlast angepasst wird. Zusätzlich ist die Absenkgeschwindigkeit auch noch von der Temperatur bzw. Viskosität des Hydrauliköls abhängig, da bei geringer Viskosität mehr Hydrauliköl durch einen gegebenen Querschnitt fließt als bei höherer Viskosität.

Da eine Bedienperson der Arbeitsmaschine nur erahnen kann, welche Nutzlast gerade auf der Hubvorrichtung der Maschine lastet, ist es meist für sie schwierig den genauen Öffnungsquerschnitt des Steuerventils einzustellen. Hohe Nutzlasten können dabei sehr schnell absinken und fast ungebremst auf den Boden aufschlagen, was angebaute Geräte beschädigen oder während der Fahrt der Arbeitsmaschine zu gefährlichen Betriebszuständen führen kann. Auch wenn die Nutzlast nicht gleich bis auf den Boden herabfällt, wird es schwierig für einen Bediener, diese feinfühlig auf eine bestimmte Position hin abzusenken.

Es ist daher üblich, den maximalen Öffnungsquerschnitt des Steuerventils elektronisch zu begrenzen und der Bedienperson hierüber den ganzen Hebelweg des Bedienhebels zur Verfügung stellt, obwohl sich das Ventil nur zu einem Drittel öffnet. Diese erzwungene Begrenzung des maximalen Öffnungsquerschnitts führt dazu, dass die Bedienperson die Bedienung als feinfühliger und kontrollierbarer erfährt, muss aber von der Bedienperson von Hand vorgewählt werden, da sie nicht automatisch erfolgt.

Ausgehend hiervon ist die Aufgabe der vorliegenden Erfindung eine in der Betriebsart Senken einfacher bedienbare Hubvorrichtung bereitzustellen.

Die Aufgabe wird gelöst durch eine Hubvorrichtung zum Heben und Senken einer Nutzlast, die über ein mittels einer elektronischen Steuereinheit angesteuertes hydraulisches Steuerventil in zumindest den Betriebsarten Heben und Senken betreibbar ist und eine mit der elektronischen Steuereinheit zum Austausch von Datensignalen verbundene Wiegeeinrichtung zur Erfassung eines Belastungszustandes der Hubvorrichtung, wobei die elektronische Steuereinheit in der Betriebsart Senken einen Öffnungsquerschnitt des hydraulischen Steuerventils in Abhängigkeit des erfassten Belastungszustandes der Hubvorrichtung einstellt.

Erfindungsgemäß wird während des Betriebs der Hubvorrichtung in der Betriebsart Senken die Gewichtskraft der mit der Hubvorrichtung geladene Nutzlast ermittelt und einem Algorithmus der elektronische Steuereinheit zur Verfügung gestellt. Der Algorithmus begrenzt den maximalen Öffnungsquerschnitt des Steuerventils während der Betriebsart Senken. Der Öffnungsquerschnitt beschreibt die Große der Öffnung in dem Steuerventil, durch die das unter Druck stehende Hydrauliköl drucklos in ein Reservoir des Hydraulikölkreislaufs abgelassen wird. Wenn die Bedienperson nun eine mit der Hubvorrichtung aufgenommene Nutzlast absenken will, erhält sie das Gefühl, dass die von ihr mittels eines Bedienhebels, unter Ausnutzung seines gesamten Verstellweges, beeinflussbare Geschwindigkeit des Absenkens der Nutzlast unabhängig von der Gewichtskraft der Nutzlast ist. Somit können gefährliche und sonstige ungewollte Betriebszustände vermieden werden, weil Nutzlasten mit hohen Gewichtskräften nicht mehr unkontrolliert schnell absinken. Die Vorteile der Erfindung liegen in einer Steigerung des Bedienkomforts einer Hubvorrichtung. Vorteilhaft ist auch, dass die Gefahr verringert wird, an der Hubvorrichtung angehängte Geräte durch unkontrollierbares Absenken zu beschädigen oder das Fahrzeug während der Fahrt in gefährliche Fahrzustände zu bringen.

Bevorzugt ist der elektronischen Steuereinheit eine während der Betriebsart Senken einzuhaltende Absenkgeschwindigkeit der Hubvorrichtung vorgebbar. Hierdurch kann eine weitere Komfortsteigerung erreicht werden. Insbesondere kann somit die Hubvorrichtung an spezielle Einsatzbedingungen und Gewohnheiten der Bedienperson angepasst werden. Hierbei kann die Absenkgeschwindigkeit unveränderlich aufgeprägt sein. Dies bietet sich an, wenn beispielsweise zu erwartende Einsatzbedingungen bekannt sind. Alternativ kann die Absenkgeschwindigkeit durch Bedienereingabe variierbar ist.

Bevorzugt stellt die elektronische Steuereinheit den Öffnungsquerschnitt des hydraulischen Steuerventils zusätzlich in Abhängigkeit einer Temperatur des Hydrauliköls zum Betreiben der Hubvorrichtung ein. Hierdurch wird gewährleistet, dass das Ansprechverhalten der Hubvorrichtung unabhängig von beispielsweise einem gerade erfolgten Kaltstart der Arbeitsmaschine, an die die Hubvorrichtung angebaut ist, oder einem besonders warmen Einsatzort der Arbeitsmaschine ist.

Die Aufgabe wird ferner gelöst durch eine Arbeitsmaschine mit einer daran angebauten Hubvorrichtung zum Heben und Senken einer Nutzlast, die über ein mittels einer elektronischen Steuereinheit angesteuertes hydraulisches Steuerventil in zumindest den Betriebsarten Heben und Senken betreibbar ist und eine mit der elektronischen Steuereinheit zum Austausch von Datensignalen verbundene Wiegeeinrichtung zur Erfassung eines Belastungszustandes der Hubvorrichtung, wobei die elektronische Steuereinheit in der Betriebsart Senken einen Öffnungsquerschnitt des hydraulischen Steuerventils in Abhängigkeit des erfassten Belastungszustandes der Hubvorrichtung einstellt. Bevorzugt sind zur Erfassung eines Belastungszustandes der Hubvorrichtung Sensormittel vorgesehen sind. Hierdurch lässt sich die durch die Nutzlast erzeugte Gewichtskraft direkt erfassen.

Bevorzugt sind ein Hydraulikzylinder zur Beaufschlagung der Hubvorrichtung gegenüber einem Rahmen der Arbeitsmaschine und zumindest ein Drucksensor auf einer Hubseite des Hydraulikzylinders vorgesehen. Alternativ können Dehnmessstreifen und/oder Kraftmessbolzen in einem Bereich der Hubvorrichtung vorgesehen sein. Alternativ kann bei einer Arbeitsmaschine mit einer hydraulisch gefederten Vorderachse zumindest ein Drucksensor in einem Bereich der Vorderachse vorgesehen sind.

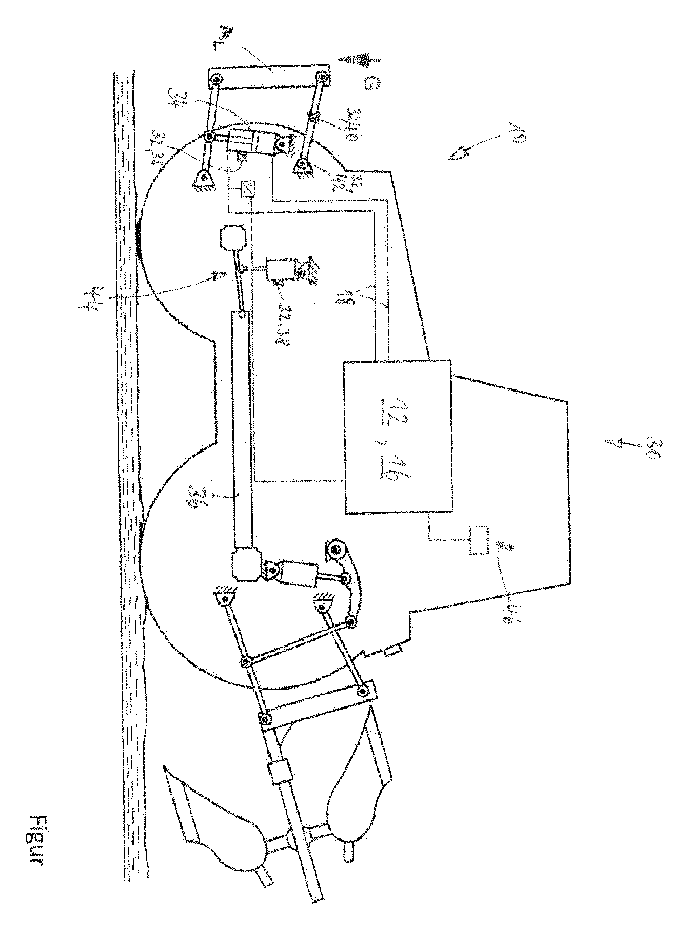

Die erfindungsgemäße Hubvorrichtung, angebaut an eine Arbeitsmaschine in Form eines Traktors, wird nachfolgend anhand der Figur erläutert.

Die Figur zeigt eine erfindungsgemäße Hubvorrichtung 10, die als Frontkraftheber an eine Arbeitsmaschine 30 in Form eines Traktors angebaut ist. Die Hubvorrichtung 10 umfasst eine elektronische Steuereinheit 12, ein hydraulisches Steuerventil 14 und eine Wiegeeinrichtung 16. Die Hubvorrichtung 10 ist an dem Traktor 30 gelenkig beziehungsweise schwenkbar angelenkt und kann mittels zumindest einem Hydraulikzylinder 34 gegenüber einem Rahmen 36 des Traktors 30 verschwenkt und beaufschlagt werden. An der Hubvorrichtung kann eine Nutzlast m_{L} angehängt beziehungsweise von ihr aufgenommen sein. Eine Bedienperson kann über einen Bedienhebel 46 Steuersignale zum Bewegen der Hubvorrichtung 10 an die elektronische Steuereinheit 12 übermitteln. Der Traktor 30 ist vorliegend mit einer optionalen hydraulisch gefederten Vorderachse 44 ausgestattet.

Der Hydraulikzylinder 34 wird über einen Arbeitshydraulikstrom 18 durch die elektronische Steuereinheit 12 doppelseitig betrieben. Weitere Details des Kreislaufs des Arbeitshydraulikstroms 18, wie beispielsweise ein Hydraulikpumpe, Druckregelventile, Filter, Drosseln, Reservoir, sind dem Fachmann bekannt und werden nicht beschrieben. Auf der Druckseite des Hydraulikzylinders 34 ist das hydraulische Steuerventil 14 vorgesehen, welches von der elektronischen Steuereinheit 12 angesteuert wird, so dass in der Betriebsart Senken ein von dem Belastungszustand der Hubvorrichtung 10 unabhängige Ansenkgeschwindigkeit gehalten werden kann. Als Eingangsgröße hierzu erfasst die Wiegeeinrichtung 16 die Gewichtskraft G der auf der Hubvorrichtung 10 lastenden Nutzlast m_{L}. Die Wiegeeinrichtung 16 ist mit der elektronischen Steuereinheit 12 zum Austausch von Datensignalen verbunden.

Zur Erfassung der Gewichtskraft G der Nutzlast m_{L} umfasst die Wiegeeinrichtung 16 Sensormittel 32. Die Sensormittel 32 können als Drucksensoren 38 auf der Druckseite des Hydraulikzylinders 34 vorgesehen sein. Alternativ oder zusätzlich können Dehnmesssteifen 40 an der Hubvorrichtung vorgesehen sein. Alternativ oder zusätzlich können Kraftmessbolzen 42 an einer Aufhängung der Hubvorrichtung 10 gegenüber dem Traktor 30 vorgesehen sein. Alternativ oder zusätzlich können Drucksensoren 38 an Hydraulikzylindern der Vorderachse 44 vorgesehen sein.

### Bezugszeichenliste

- 10: Hubvorrichtung
- 12: Steuereinheit
- 14: Steuerventil
- 16: Wiegeeinrichtung
- 18: Arbeitshydraulikstrom
- 30: Arbeitsmaschine
- 32: Sensormittel
- 34: Hydraulikzylinder
- 36: Rahmen
- 38: Drucksensor
- 40: Dehnmessstreifen
- 42: Kraftmessbolzen
- 44: Vorderachse
- 46: Bedienhebel
- m_{L}: Nutzlast
- G: Gewichtskraft Nutzlast

## Patentansprüche

1. Hubvorrichtung (10) zum Heben und Senken einer Nutzlast (m_{L}), die über ein mittels einer elektronischen Steuereinheit (12) angesteuertes hydraulisches Steuerventil (14) in zumindest den Betriebsarten Heben und Senken betreibbar ist und
eine mit der elektronischen Steuereinheit (12) zum Austausch von Datensignalen verbundene Wiegeeinrichtung (16) zur Erfassung eines Belastungszustandes der Hubvorrichtung (10),
wobei die elektronische Steuereinheit (12) in der Betriebsart Senken einen Öffnungsquerschnitt des hydraulischen Steuerventils (14) in Abhängigkeit des erfassten Belastungszustandes der Hubvorrichtung (10) einstellt.

2. Hubvorrichtung (10) nach Anspruch 1, wobei der elektronischen Steuereinheit (12) eine während der Betriebsart Senken einzuhaltende Absenkgeschwindigkeit der Hubvorrichtung (10) vorgebbar ist.

3. Hubvorrichtung (10) nach Anspruch 2, wobei die Absenkgeschwindigkeit unveränderlich aufgeprägt ist.

4. Hubvorrichtung (10) nach Anspruch 2, wobei die Absenkgeschwindigkeit durch Bedienereingabe variierbar ist.

5. Hubvorrichtung (10) nach einem der Ansprüche 1 bis 4, wobei die elektronische Steuereinheit (12) den Öffnungsquerschnitt des hydraulischen Steuerventils (14) zusätzlich in Abhängigkeit einer Temperatur des Hydrauliköls zum Betreiben der Hubvorrichtung (10) einstellt.

6. Arbeitsmaschine (30), umfassend eine daran angebaute Hubvorrichtung (10) nach einem der vorangegangenen Ansprüche.

7. Arbeitsmaschine (30) nach Anspruch 6, wobei zur Erfassung eines Belastungszustandes der Hubvorrichtung (10) Sensormittel (32) vorgesehen sind.

8. Arbeitsmaschine (30) nach Anspruch 7, wobei ein Hydraulikzylinder (34) zur Beaufschlagung der Hubvorrichtung (10) gegenüber einem Rahmen (36) der Arbeitsmaschine (30) und wobei zumindest ein Drucksensor (38) auf einer Hubseite des Hydraulikzylinders (34) vorgesehen ist.

9. Arbeitsmaschine (30) nach Anspruch 7, wobei Dehnmessstreifen (40) und/oder Kraftmessbolzen (42) in einem Bereich der Hubvorrichtung (10) vorgesehen sind.

10. Arbeitsmaschine (30) nach Anspruch 7 mit einer hydraulisch gefederten Vorderachse (44), wobei zumindest ein Drucksensor (38) in einem Bereich der Vorderachse vorgesehen ist.
